# EUROPEAN PATENT APPLICATION

(11) **EP 1 321 393 A1**
(43) Date of publication of application: **25.06.2003**
(21) Application number: 02026358.8
(22) Date of filing: 22.11.2002
(51) Int. Cl.: B65G 47/64, B65G 47/71

(54) **Belt conveyor for distributing products**

(30) Priority: 13.12.2001 IT BO20010756
(71) Applicant: M.C. s.r.l., 48018 Faenza (Ravenna) (IT)
(72) Inventor: Valentini, Vladimiro, 48018 Faenza (Prov. of Ravenna) (IT)
(74) Representative: Modiano, Guido, Dr.-Ing.

(57) **Abstract**

A belt conveyor for distributing products comprising a belt (2) that is closed in a loop and has an active upper portion, a fixed end (4) and a movable end (5), translational motion means being provided which are suitable to move the movable end between two opposite end positions in a direction that is substantially perpendicular to the direction of advancement of the products, the belt (2) being of the type suitable to assume curved configurations in order to connect the fixed end (4) to the movable end (5), which is offset with respect to the fixed end (4).

## Description

The present invention relates to a belt conveyor for distributing products.

In the particular field of industrial automation, belt elements for feeding a stream of products, for example in input to an automatic machine, are widely used. These belts are often very wide and can have a plurality of parallel advancement rows, formed by suitable fixed partitions that affect the incoming stream of products and distribute it among the various rows.

The incoming stream of products is usually conveyed on a conveyance line and is fed directly onto the belt in order to be divided into rows. The division of the stream by means of partitions is often scarcely efficient and is poorly suited, for example, for maintaining the correct orientation of products that are not axially symmetrical; it is also unable to ensure a sufficiently accurate distribution of the products among the rows.

The aim of the present invention is to provide a belt conveyor that, when arranged downstream of a line for conveying a stream of products, allows to divide such stream among multiple parallel rows.

Within this aim, an object of the present invention is to provide a belt conveyor that allows to divide the stream of products accurately according to the intended criteria.

Another object of the present invention is to provide a belt conveyor that ensures that the spatial orientation of the products is maintained after passing through it.

Another object of the present invention is to provide a belt conveyor that allows to convey products that arrive from multiple parallel rows on a single conveyance line.

Another object of the present invention is to provide a structure that is simple, relatively easy to provide in practice, safe in use, effective in operation and relatively low in cost.

This aim and these and other objects that will become better apparent hereinafter are achieved by the present belt conveyor for distributing products, characterized in that it comprises a belt that is closed in a loop and has an active upper portion, a fixed end and a movable end, translational motion means being provided which are suitable to move said movable end between two opposite end positions in a direction that is substantially perpendicular to the direction of advancement of the products, said belt being of the type suitable to assume curved configurations in order to connect said fixed end to said movable end, which is offset with respect to said fixed end.

Further characteristics and advantages will become better apparent and evident from the detailed description of a preferred but not exclusive embodiment of a belt conveyor for distributing products according to the invention, illustrated only by way of non-limitative example in the accompanying drawings, wherein:
Figure 1 is a perspective view of the belt conveyor according to the invention;
Figure 2 is a perspective view of a detail of the belt and of the translational motion means;
Figure 3 is a partially sectional side elevation view of a detail of the translational motion means;
Figure 4 is a perspective view of a constructive detail of the translational motion means;
Figure 5 is a perspective view of a detail of the conveyor in two different functional configurations.

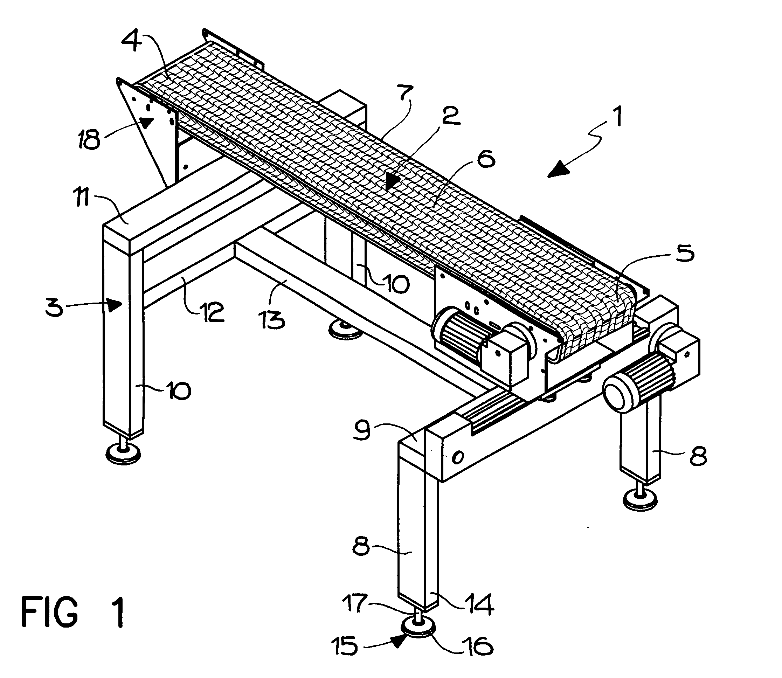

With particular reference to figure 1, the reference numeral 1 generally designates a belt conveyor for distributing products according to the invention.

The conveyor comprises a belt 2, which is closed in a horizontally elongated loop, is supported rotatably on a footing 3 and has a fixed end 4, a movable end 5 and an active upper portion 6 for conveying a stream of products.

Such belt usually constitutes the end part of a conveyance line and leads to belt elements, not shown in the figures, which are generally wider, are arranged downstream of the movable end 5 and are for example suitable to feed an automatic machine: multiple parallel rows for the flow of the products are formed in said belt elements.

The belt 2, which is of a substantially known type, is composed of a plurality of elongated transverse elements 7 that are articulated one another in succession by way of elastic coupling means, constituted for example by pivots engaged in slots; said elements are suitable to form a loop-like structure that is essentially elastic and also withstands flexural stresses acting on a horizontal plane.

The footing 3 comprises a first pair of uprights 8, which are connected by a first beam 9, and a second pair of uprights 10, which are longer and are connected by a second beam 11 and by a cross-member 12, which lies below the second beam 11 and is parallel thereto. The first beam 9 and the cross-member 12 are connected, substantially at the centerline, by a longitudinal member 13. Each upright of the first and second pairs 8 and 10 has, at its base 14, a foot 15 whose height is adjustable and is constituted by a pad 16 made of antislip synthetic material that is rigidly coupled to a stem 17 threaded into said base 14.

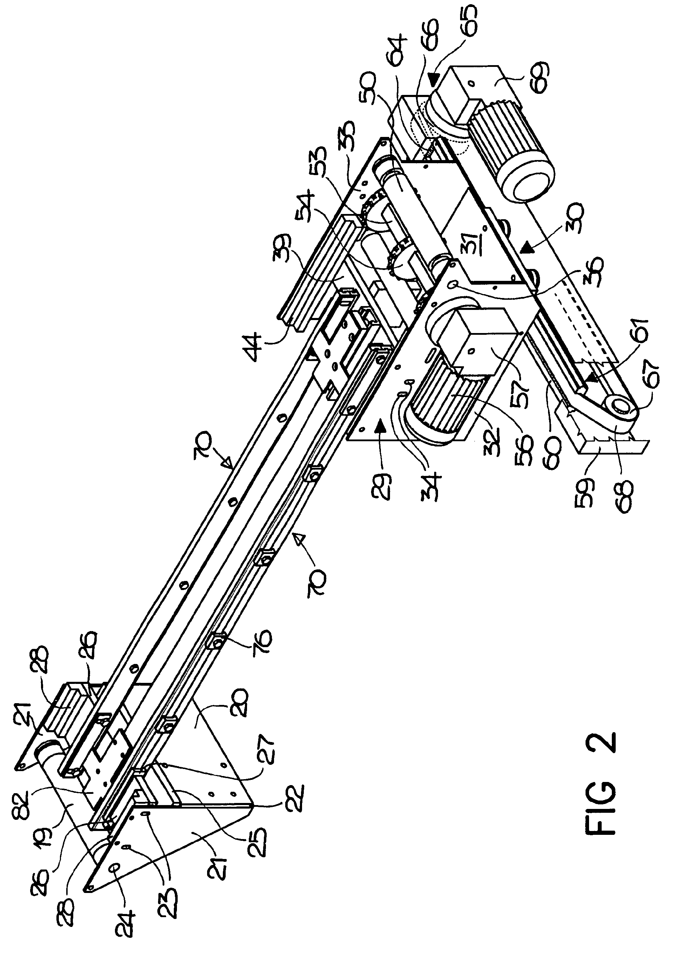

A support 18 (Figure 2) is fixed, for example by bolting on the rear face, substantially at the centerline of the second beam 11 and supports an end roller 19 for guiding the belt 2, at the fixed end 4. The support 18 is constituted by a vertical wall 20, which is connected to the second beam 11, and by two opposite side walls 21, which are shaped substantially like a right-angled triangle, each having a respective cathetus 22 that is fixed along the corresponding opposite vertical sides of said vertical wall 20. Each side wall 21 is provided with a first pair of vertical slots 23, which are arranged side by side along the horizontal cathetus, and with a through hole 24, which is located at the vertex of the triangle. The side walls 21 are connected one another by a first horizontal stiffening plate 25.

Two brackets 26 are fixed, at an adjustable height, to the internal faces of the respective side walls 21 by means of pairs of threaded parallel pins which protrude on one side and are engaged in the respective first pairs of slots 23. Each bracket 26 ends, at its free end, with a respective wing 27 that has three longitudinal and parallel raised portions; furthermore, each bracket 26 is surmounted, in the region that is contiguous to the respective side wall 21, by a corresponding first guide 28 for the sliding of the belt 2, which is constituted by an elongated plate that has a substantially L-shaped cross-section, with the back in contact with the respective side wall 21.

The belt 2 is rotatably supported, at the movable end 5 (Figure 2), on a frame 29 that is associated with the footing 3, and in particular with the first beam 9, by way of transverse translational motion means 30, which are suitable to move said movable end between two opposite positions in a direction that is substantially perpendicular to the direction of the stream of products.

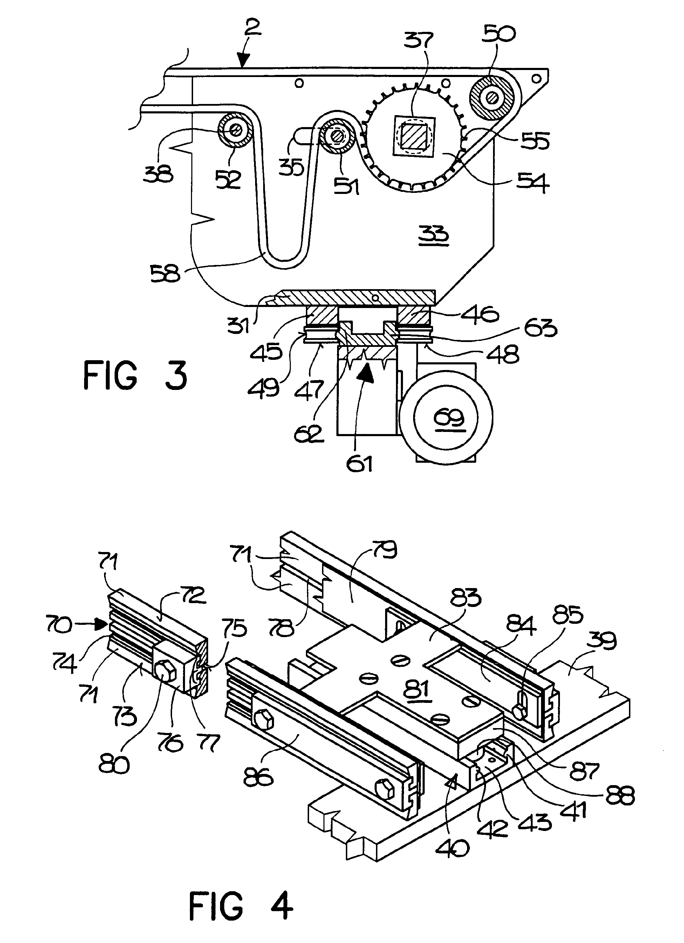

The frame 29 is constituted by a bottom 31, from the sides of which a first side wall 32 and a second side wall 33 protrude vertically, forming a substantially box-like structure that is open in an upward region, at the front and at the rear. Each side wall 32 and 33 has a second pair of vertical and parallel slots 34, a horizontal slot 35 (Figure 3), a first hole 36, a second hole 37, and a third hole 38, the second hole having a larger diameter. Respective pairs of threaded pins are inserted in the second pair of slots 34 and protrude from the opposite sides of a second horizontal plate 39 that is vertically adjustable and connects the first side wall 32 to the second side wall 33.

A sliding track 40 (Figure 4), orientated in the direction of the stream of products, is fixed substantially at the centerline of the second plate 39 and has a transverse cross-section that is shaped essentially like an inverted C, in which the corresponding vertical wings 41 are provided internally with respective facing semicircular protrusions 42 that accordingly form an inverted T-shaped slot 43 internally.

Respective second guides 44 for the sliding of the belt 2 (Figure 2) are connected to the first side wall 32 and to the second side wall 33, on the inner faces, along the upper sides, for example by means of screws, and are constituted by elongated plates that have a substantially L-shaped cross-section, the back of which is in contact with the respective inner faces of the side walls 32 and 33.

A first elongated bar 45 and a second elongated bar 46 are rigidly coupled, in a downward region, to the bottom 31, are orientated transversely to the stream and are parallel; each bar rotatably supports, substantially at the centerline, respectively a first pair of wheels 47 and a second pair of wheels 48, each of which has an annular groove 49 on its lateral surface (Figure 3).

A first guiding roller 50 is rotatably supported in each first hole 36 of the side walls 32 and 33 (Figures 2 and 3), with mutually opposite end portions that have a smaller diameter; said roller is arranged substantially at the same level as the end roller 19 and is locked thereat for example by means of nuts; a second guiding roller 51 is rotatably supported, with end portions that have a smaller diameter, in each horizontal slot 35 and is locked thereat for example by means of nuts. A third guiding roller 52, arranged substantially at the same level as the second roller 51, is instead supported rotatably in each third hole 38.

A shaft 53 for driving the belt 2, having a substantially square cross-section (Figure 2), is rotatably supported, with mutually opposite cylindrical end portions, in each second hole 37; a plurality of sprockets 54 are keyed equidistantly on the shaft and are provided with teeth 55 for driving the belt 2. The shaft 53 extends beyond the first side 32, where it is connected rigidly and coaxially to the output shaft of a motor 56 with a corresponding gearbox 57, which are fixed to the outer face of the first side wall 32.

The belt 2 is wound (Figure 3), at the movable end 5, around the first guiding roller 50 and extends, with its lower portion, below the shaft 53, where it winds around the sprockets 54 in a downward region, meshing by means of the teeth 55 with corresponding openings formed in the elements 7; the belt then rests on the second guiding roller 51 and on the third guiding roller 52, forming between them a bend 58 whose length depends on the position of the movable end 5.

The translational motion means 30 comprise a supporting housing 59 (Figure 2) that is shaped substantially like an elongated parallelepiped that is open in a downward region and is fixed, by means of its rear face, along the first beam 9; the housing 59 has, on its upper face and in the central region, a recess 60 that extends substantially from one end to the other. A guide 61 lies in said recess transversely to the stream of products and is constituted by a profiled element that has an essentially U-shaped cross-section whose wings 62 are provided externally with mutually opposite semicircular longitudinal ribs 63.

Two facing vertical openings 64 are provided at the opposite ends of the recess 60 and are connected to the cavity of the housing 59. The housing comprises reciprocating linear actuation means 65 for actuating said movable end 5, which are constituted by a driving pulley 66 and a guiding pulley 67 which have parallel axes and are supported rotatably at the opposite ends of the housing 59 and around which a belt 68 is wound whose upper portion passes through the openings 64 and is slidingly engaged along the guide 61. The driving pulley 66 is keyed onto the output shaft of a gearmotor 69, which is fixed to the front face of the housing 59.

The upper portion of the belt 68 is rigidly coupled under the bottom 31 of the frame 29, while the first and second pairs of wheels 47, 48 engage by rolling, with their annular grooves 49, on the respective semicircular ribs 63 of the guide 61, slidingly supporting said frame 29.

The support 18, which is fixed and rigidly coupled to the second beam 11, and the frame 29, which can move transversely on the corresponding guide 61, are connected by two flexible parallel longitudinal members 70 (Figures 2 and 4), which extend longitudinally from the brackets 26 to the second plate 39. Each one of the two longitudinal members 70 is constituted by two superimposed slats 71 made of a synthetic material having a low friction coefficient, in order to support and assist the sliding of the belt 2.

Each slat 71 has an upper sliding surface 72, a lateral surface 73 provided with a longitudinal groove 74, and a lower resting surface 75. The slats 71 are arranged so that their corresponding resting surfaces 75 face each other, so that the sliding surfaces 72 are orientated respectively upwardly and downwardly. The two slats 71 of each longitudinal member 70 are connected one another by a plurality of lateral clips 76, which have three raised portions 77 and engage the grooves 74 and the longitudinal slots 78 formed between the slats 71. On the opposite side with respect to the clips 76 there are laminar spacers 79, which are applied along the slats 71 and are fixed thereat by means of bolts 80 that pass through said clips 76.

The mutual connection between the longitudinal members 70 is provided, at the opposite ends, by means of a first cross-shaped element 81 and a second cross-shaped element 82 (Figure 2), which are arranged between said members and whose respective arms 83 are extended by brackets 84 for fixing to said longitudinal members 70, with parallel slots 85 for bolting at an adjustable height.

The first cross-shaped element 81 (Figure 4), which is connected by bolting to the brackets 84 to the longitudinal members 70 with the aid of corresponding complementary plates 86 with three raised portions similar to those of the clips 76 and of the wings 27, also provides a sliding coupling with the second plate 39, and is provided monolithically, in a downward region, with a shoe 87 from which a contoured slider 88 protrudes downwardly; the slider engages along the sliding track 40, allowing the transverse movement of the movable end 5 of the belt 2.

The second cross-shaped element 82 instead allows the packed bolting of the corresponding brackets 84, the flexible longitudinal members 70, and the wings 27 at the support 18.

Operation of the belt conveyor according to the invention is as follows: the products, to be distributed along multiple parallel rows, advance on the belt 2 by way of the actuation obtained by means of the motor 56 that drives the shaft 53. In relation to the row to be fed, the gearmotor 69 drives the belt 68, which moves the frame 29 so that the movable end 5 is placed selectively in the selected product flow path.

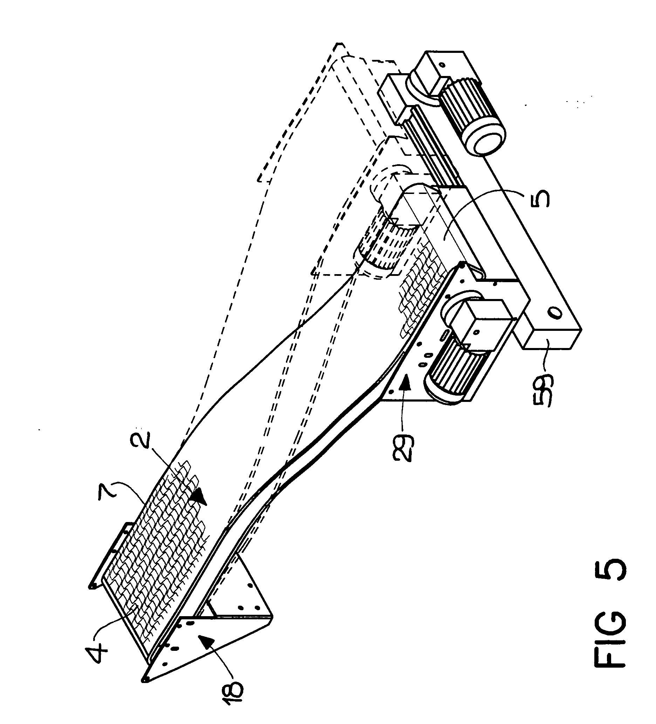

The belt assumes substantially curved configurations (Figure 5) by way of the articulations between the transverse elements 7, and the flexible longitudinal members 70 accordingly flex in the direction of motion of the movable end 5; within the movements of the frame 29, the shaped slider 88 can slide within the corresponding track 40, maintaining the connection between the longitudinal members 70 and the frame 29. Furthermore, the bend 58 of the belt 2 between the second roller 51 and the third roller 52 (Figure 3) has a length that can vary depending on operation, reaching the maximum value when the belt is substantially straight and the minimum value in the two mutually opposite end positions, when the belt elongates and assumes a curved shape.

It is noted that the conveyor can also be operated with the belt elements arranged downstream of the fixed end 4, receiving selectively the stream of incoming products from multiple parallel rows, which enter the conveyor at the movable end 5; to achieve this last operating condition it is sufficient to reverse the direction of rotation of the motor 56 and therefore of the shaft 53 that drives the belt 2.

It has thus been shown that the invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.
The disclosures in Italian Patent Application No. BO2001A000756 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A belt conveyor for distributing products, **characterized in that** it comprises a belt (2) that is closed in a loop and has an active upper portion (6), a fixed end (4) and a movable end (5), translational motion means (30) being provided which are suitable to move said movable end (5) between two opposite end positions in a direction that is substantially perpendicular. to the direction of advancement of said products, said belt (2) being of the type suitable to assume curved configurations in order to connect said fixed end (4) to said movable end (5), which is offset with respect to said fixed end (4).

2. The belt conveyor according to claim 1, **characterized in that** said fixed end (4) is the input for said products and **in that** said movable end (5) is suitable to distribute selectively said products on a plurality of parallel rows.

3. The belt conveyor according to claim 1, **characterized in that** said fixed end (4) is the output for said products and **in that** said movable end (5) is suitable to be crossed by said products that arrive selectively from a plurality of parallel rows.

4. The belt conveyor according to claim 1, **characterized in that** said translational motion means (30) comprise a horizontal guide (61) that lies substantially transversely to the advancement direction of said products and along which said movable end (5) is slidingly engaged, said end being associated with reciprocating linear actuation means (65).

5. The belt conveyor according to claim 4, **characterized in that** said reciprocating linear actuation means (65) comprise a gearmotor (69) with a corresponding driving pulley (66) and a guiding pulley (67), on which a belt (68) is wound which has an upper portion that is coupled rigidly and substantially at the centerline with respect to a frame (29) for rotatably supporting said movable end (5).

6. The belt conveyor according to claim 5, **characterized in that** a motor (56) with a corresponding gearbox (57) is supported on said frame (29) and is connected in output to a shaft (53) for the actuation of said belt (2).

7. The belt conveyor according to claim 1, **characterized in that** said belt (2) is constituted by a plurality of elongated transverse elements (7) which are articulated in succession by way of elastic coupling means, which are suitable to provide a closed-loop structure that is substantially elastic and flexible.

8. The belt conveyor according to claims 6 and 7, **characterized in that** multiple sprockets (54) are keyed onto said shaft (53) and are provided with teeth (55) that mesh with said transverse elements (7) in order to turn said belt (2).

9. The belt conveyor according to claims 4 and 5, **characterized in that** said guide (61) has a substantially C-shaped cross-section and is provided laterally with two opposite longitudinal ribs (63) for the sliding of two respective pairs of wheels (47, 48) which have a vertical axis and have, on their lateral surface, an annular groove (49) that is shaped complementarily to said ribs (63), said wheels being rotatably supported under said frame (29).
